# EUROPEAN PATENT SPECIFICATION

(11) **EP 3 140 765 B1**
(45) Date of publication and mention of the grant of the patent: **18.12.2019**
(21) Application number: 14726779.3
(22) Date of filing: 05.05.2014
(51) Int. Cl.: G06F 21/32, G06F 21/35, G06F 21/36, G06F 3/0346, G06F 3/01, H04W 12/06

(54) **USER AUTHENTICATION BASED ON BODY TREMORS**
BENUTZERAUTHENTIFIZIERUNG AUF DER BASIS VON KÖRPERTREMOR
AUTHENTIFICATION D'UTILISATEUR BASÉE SUR DES TREMBLEMENTS DE CORPS

(43) Date of publication of application: 15.03.2017
(73) Proprietor: Sony Corporation, Tokyo 108-0075 (JP)
(72) Inventor: ÅSTRAND, Per, S-22465 Lund (SE); LANDQVIST, Magnus, S-22736 Lund (SE); BENGTSSON, Henrik, S-226 37 Lund (SE); RODZEVSKI, Aleksandar, S-21113 Malmö (SE)
(74) Representative: Banzer, Hans-Jörg
(86) International application number: PCT/IB2014/061221
(87) International publication number: WO 2015/170139

(56) References cited:
- EP-A1- 2 378 748
- US-A1- 2005 008 148
- US-A1- 2005 243 061
- US-A1- 2012 124 662
- US-A1- 2012 126 944
- US-A1- 2013 234 836
- US-A1- 2014 085 050

## Description

### TECHNICAL FIELD

The present disclosure relates to authenticating a user of a mobile computing device, and more particularly to performing such an authentication based on a comparison of body tremors.

### BACKGROUND

Wearable computing devices are becoming increasingly popular, and are being used as companion devices for smartphones. For example, interest is increasing in so-called "smart watches" that can communicate with a nearby smartphone to display information to users.
Some example information that has been proposed for display on such wearable computing devices includes email and Short Message Service (SMS) notifications, for example. Such wearable computing devices that are worn around a user's wrist are sometimes referred to as "wristlets."

Some wearable computing devices are being used for various health monitoring applications. For example, some "life logger" devices include three-dimensional accelerometers that sense user movement. Measurements from these sensors can be used for various fitness calculations, such as a distance walked, a quantity of steps taken, activity duration and intensity, etc. Such calculations can be accumulated over a time period and then transmitted to a computing device (e.g., a smartphone or desktop computer) for long term storage. However, such data has only been used for fitness purposes.

Document US 2012/0126944 A1 discloses a system wherein a wearable device detects first physiological characteristics of a user, another device detects second physiological characteristics of the user when the user touches it. The first and second characteristics are compared and if they match communication between the two devices is authorised.

Document US 2014/0085050 A1 discloses a wearable device performing biometric authentication of a user. The wearable device communicates with a mobile device.

Document US 2005/0243061 A1 discloses authenticating a user based on user's body tremor's gathered during a training phase.

### SUMMARY

According to one aspect of the present disclosure, a method is implemented by a mobile computing device to authenticate a user. A first signal indicative of a body tremor of a limb holding the mobile computing device is detected. A second signal indicative of a body tremor of a limb to which a separate wearable computing device is secured is also detected. Based on a comparison of both signals, after receiving the second signal from the wearable computing device, a determination is made as to whether the limbs are the same limb. A user account associated with the wearable computing device is authenticated based on the determining indicating that the limbs are the same limb.

In one or more embodiments, authenticating the user includes granting access to a limited-access feature on the mobile computing device (e.g., bypassing a lock screen). In the same or other embodiments, authenticating the user includes automatically answering an incoming phone call to the mobile computing device.

In some embodiments, the first signal is detected by converting accelerometer data from the mobile computing device to the frequency domain to produce the first signal, and the second signal is detected by converting accelerometer data from the wearable computing device to the frequency domain to produce the second signal.

In some embodiments, determining whether the limbs are the same is characterized by determining a correlation between the first and second signals, and determining that the limbs are the same limb if the correlation indicates that the first and second signals differ by less than a difference threshold. In some embodiments, determining the correlation includes determining a first frequency profile of the first signal within a predefined bandwidth, determining a second frequency profile of the second signal within the predefined bandwidth, and correlating the first frequency profile with the second frequency profile.

According to another aspect of the present disclosure, a mobile computing device is disclosed that includes one or more processing circuits configured to detect a first signal indicative of a body tremor of a limb holding the mobile computing device, and to detect a second signal indicative of a body tremor of a limb to which a separate wearable computing device is secured, wherein the second signal is obtained from the wearable computing device. The one or more processing circuits are further configured to determine, based on a comparison of the body tremors, whether the limbs are the same limb. The one or more processing circuits are further configured to authenticate a user account associated with the wearable computing device based on the determining indicating that the limbs are the same limb. The mobile computing device also includes a communication interface circuit configured to communicate with the wearable computing device to enable the detection of the second signal.

In some embodiments, the one or more processing circuits are configured to authenticate the user by granting access to a limited-access feature on the mobile computing device (e.g., bypassing a lock screen). In the same or other embodiments, one or more processing circuits are configured to authenticate the user by automatically answering an incoming phone call to the mobile computing device.

In some embodiments, the one or more processing circuits are configured to detect the first signal by converting accelerometer data from the mobile computing device to the frequency domain to produce the first signal, and to detect the second signal by converting accelerometer data from the wearable computing device to the frequency domain to produce the second signal.

In some embodiments, the one or more processing circuits are configured to determine whether the limbs are the same by determining a correlation between the first and second signals, and determining that the limbs are the same limb if the correlation indicates that the first and second signals differ by less than a difference threshold. In some embodiments, the one or more processing circuits are configured to determine the correlation by determining a first frequency profile of the first signal within a predefined bandwidth, determining a second frequency profile of the second signal within the predefined bandwidth, and correlating the first frequency profile with the second frequency profile.

According to another aspect of the present disclosure, a computer program product is stored in a non-transitory computer-readable medium for authenticating a user of a mobile computing device. The computer program product includes software instructions which, when run by a processor of the mobile computing device, configures the mobile computing device to detect a first signal indicative of a body tremor of a limb holding the mobile computing device, and detect a second signal indicative of a body tremor of a limb to which a separate wearable computing device is secured, wherein the second signal is obtained from the wearable computing device. The software instructions further configure the mobile computing device to determine, based on a comparison of the body tremors, whether the limbs are the same limb; and authenticate a user account associated with the wearable computing device based on the determining indicating that the limbs are the same limb.

In some embodiments, the software instructions configure the mobile computing device to authenticate the user by configuring the mobile computing device to grant access to a limited-access feature on the mobile computing device (e.g., bypassing a lock screen). In the same or other embodiments, the software instructions configure the mobile computing device to authenticate the user by configuring the mobile computing device to automatically answer an incoming phone call to the mobile computing device.

In some embodiments, the software instructions configure the mobile computing device to detect the first signal by configuring the mobile computing device to convert accelerometer data from the mobile computing device to the frequency domain to produce the first signal, and the software instructions configure the mobile computing device to detect the second signal by configuring the mobile computing device to convert accelerometer data from the wearable computing device to the frequency domain to produce the second signal.

In some embodiments, the software instructions configure the mobile computing device to determine whether the limbs are the same by configuring the mobile computing device to determine a correlation between the first and second signals, and determine that the limbs are the same limb if the correlation indicates that the first and second signals differ by less than a difference threshold. In some embodiments, the software instructions configure the mobile computing device to determine the correlation configuring the mobile computing device to determine a first frequency profile of the first signal within a predefined bandwidth, determine a second frequency profile of the second signal within the predefined bandwidth, and correlate the first frequency profile with the second frequency profile.

### BRIEF DESCRIPTION OF THE DRAWINGS

Fig. 1 illustrates an example mobile computing device and wearable computing device.
Fig. 2 illustrates an example method performed by the mobile computing device to authenticate a user according to one embodiment.
Fig. 3 illustrates an example implementation of aspects of the method of Fig. 2.
Fig. 4 illustrates an example mobile computing device and wearable computing device in greater detail.
Fig. 5 illustrates an example method performed by a mobile computing device to authenticate a user according to another embodiment.
Fig. 6 illustrates an example implementation of aspects of the method of Fig. 5.
Fig. 7 illustrates an example mobile computing device operative to implement the method of Fig. 5.

### DETAILED DESCRIPTION

In every human body there are unintentional muscle movements along various body parts, which are known as physiological tremors (referred to as "body tremors" herein). A body tremor is an involuntary, approximately rhythmic and roughly sinusoidal movement which may or may not be noticeable by the human eye. Each person is believed to have a different unique body tremor, in part because the characteristics of body tremors of a person depend on the bone structure and the muscle tone/density of that person. The frequency of tremors in the wrist and hand typically range from 8 to 12 Hz, for example.

The present disclosure describes methods and related apparatuses for authenticating a user of a mobile computing device based on an analysis of signals indicative of a body tremor. In the prior art, physiological tremors have been suppressed (see, e.g., "Sensing Physiological Tremor in a Hand-Held Microsurgical Instrument" by Saxena, Abhijit et al. in the publication SBC2013-14185 of the ASME 2013 Summer Bioengineering Conference, June 26-29, Sunriver, Oregon, USA). Instead of suppressing such tremors, the techniques discussed herein analyze such tremors for authentication purposes. In this regard, the user's body tremor acts as a sort of token for authentication.

In some embodiments, a first signal indicative of a body tremor of a limb holding a mobile computing device is detected, and a second signal indicative of a body tremor of a limb to which a separate wearable computing device is secured is also detected. Based on a comparison of the body tremors, a determination is made of whether the limbs are the same limb (i.e., of whether the wearable computing device is secured to a same limb that is holding the mobile computing device). A user account of the mobile computing device that is associated with the wearable computing device is authenticated based on the determining indicating that the limbs are the same limb.

Typically, when a user presses a power button of a smartphone, a lock screen (e.g., a password protected lock screen) is activated before the user is permitted to access their home screen. The authentication performed based on a determination that a wearable computing device is secured to a limb, and a mobile computing device is being held by the same limb could include bypassing such a lock screen. Thus, authenticating the user account may include granting access to a limited-access feature on the mobile computing device (e.g., bypassing a lock screen of the mobile computing device), for example. As another example, authenticating the user may include automatically answering an incoming phone call to the mobile computing device.

Of course, other types of authentication could be used. For example, various features could be performed that that would otherwise require secondary authentication. For example, once a user is already past the lock screen and has access to their smartphone (i.e., a first authentication was successful), a password may be required to change a security setting or purchase a smartphone application (i.e., a second authentication). That second authentication could be performed without password entry based on the body tremor comparison discussed herein.

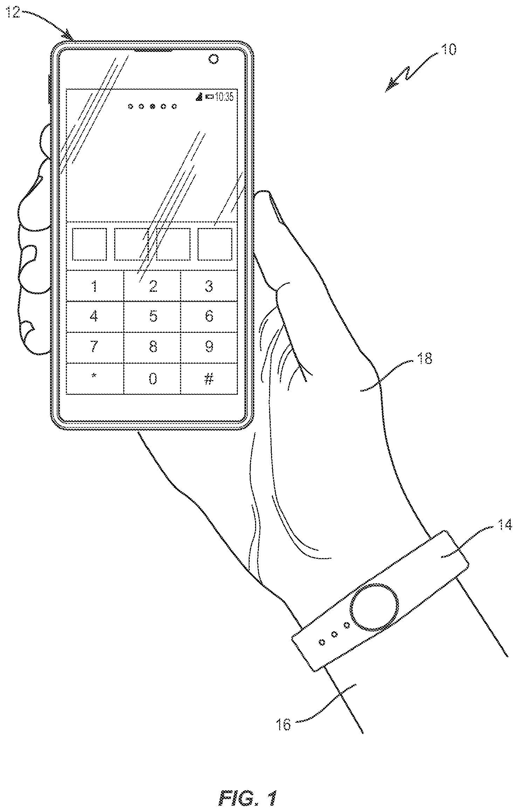

With this in mind, Fig. 1 schematically illustrates a system 10 for performing authentication based on body tremors. The system 10 includes a mobile computing device 12 and a wearable computing device 14. The wearable computing device 14 is secured to a limb 16 which is an arm in the example of Fig. 1, and the mobile computing device 12 is held by that same limb 16, via a hand 18 of the limb 16. Each of the mobile computing device 12 and wearable computing device 14 includes one or more accelerometers operative to detect movement. Although the wearable computing device is shown as a wrist-wearable device, it is understood that this is only an example, and that other wearable computing devices could be used (e.g., a ring or armband).

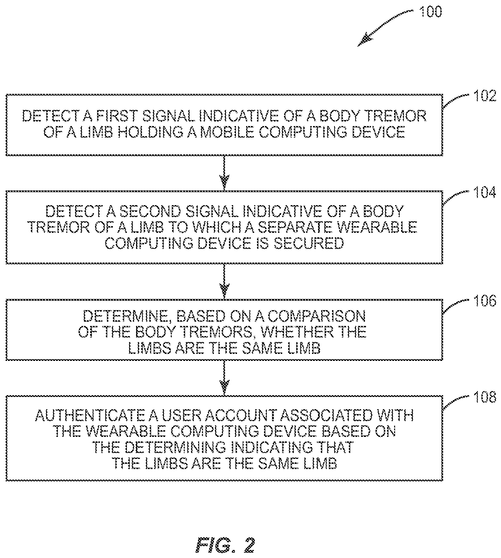

Fig. 2 illustrates an example method 100 performed by the mobile computing 12 device to authenticate a user based on body tremors according to one embodiment. A first signal is detected which is indicative of a body tremor of a limb holding the mobile computing device 12 (block 102). A second signal is detected which is indicative of a body tremor of a limb to which the separate wearable computing device 14 is secured (block 104). Based on a comparison of the body tremors, a determination is made of whether the limbs are the same limb (block 106). A user account associated with the wearable computing device 14 is authenticated based on the determining indicating that the limbs are the same limb (block 108).

In one or more embodiments, authenticating the user account includes granting access to a limited-access feature on the mobile computing device 12 (e.g., bypassing a lock screen of the mobile computing device 12) if there is no incoming call. In the same or other embodiments, authenticating the user includes automatically answering an incoming phone call to the mobile computing device 12 (e.g., as the mobile computing device 12 is being lifted towards a user's ear) when there is an incoming call.

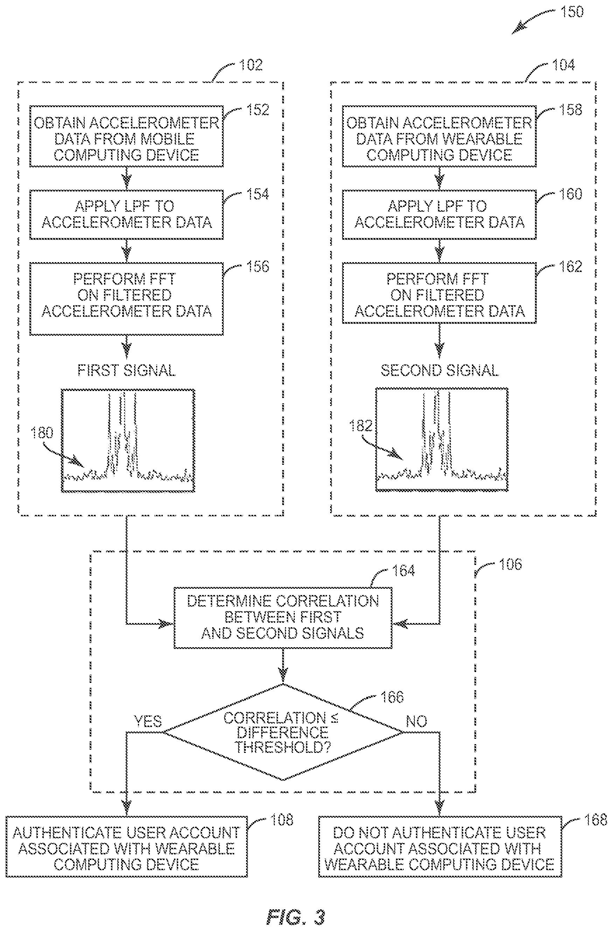

Fig. 3 illustrates an example implementation 150 of aspects of the method 100 of Fig. 2. In the example of Fig. 3, blocks 152-156 are an example implementation of block 102 from Fig. 2, blocks 158-162 are an example implementation of block 104 from Fig. 2, and blocks 164-166 are an example implementation of block 106 from Fig. 2. To implement block 102, accelerometer data is obtained from the mobile computing device 12 (block 152), a low pass filter (LPF) is applied to the accelerometer data (block 154), and a fast Fourier transform (FFT) is performed on the filtered accelerometer data (block 156) to yield the first signal 180. The first signal 180 is indicative of a body tremor of a limb holding the mobile computing device 12. The low pass filter filters out unwanted frequencies, so that only frequencies of interest are present (e.g., those on the order of 8-12 Hz which are representative of body tremors in the wrist and hand). The fast Fourier transform of block 156 converts the filtered accelerometer data from the mobile computing device 12 to the frequency domain so that the frequency of body tremors represented in the accelerometer data of mobile computing device 12 can be determined.

To implement block 104 of Fig. 2, accelerometer data is obtained from the wearable computing device 14 (block 158), a low pass filter is applied to the accelerometer data (block 160), and a fast Fourier transform is performed on the filtered accelerometer data (block 162) to yield the second signal 182. The second signal 182 is indicative of a body tremor of a limb to which the wearable computing device 14 is secured. The low pass filter filters out unwanted frequencies, so that only frequencies of interest are present (e.g., those on the order of 8-12 Hz which are representative of body tremors). The fast Fourier transform of block 162 converts the filtered accelerometer data from the wearable computing device 14 to the frequency domain so that the frequency of body tremors represented in the accelerometer data of the wearable computing device 14 can be determined.

Thus, in the embodiment of Fig. 3, detecting the first signal 180 comprises converting accelerometer data from the mobile computing device 12 to the frequency domain to produce the first signal 180, and detecting the second signal 182 comprises converting accelerometer data from the wearable computing device 14 to the frequency domain to produce the second signal 182.

To implement block 106 of Fig. 2, a correlation is determined between the first and second signals 180, 182 (block 164), and a determination is made as to whether the correlation differs by less than a difference threshold (block 166). If the correlation indicates that the first and second signals 180, 182 differ by less than a difference threshold (a "YES" to block 166), the mobile computing device 12 determines that the limbs are the same limb, and a user account of the mobile computing device 12 that is associated with the wearable computing device 14 is authenticated (block 108). Otherwise, if the difference is greater than the difference threshold (a "NO" to block 166), then the user account associated with the wearable computing device 14 is not authenticated (block 168).

In some embodiments, determining a correlation between the first and second signals 180, 182 (block 164) includes determining a first frequency profile of the first signal 180 within a predefined bandwidth (e.g., 8-12 Hz), determining a second frequency profile of the second signal 182 within the predefined bandwidth, and correlating the first frequency profile with the second frequency profile.

The correlation of block 164 can be performed in many different ways. One way to perform such a correlation would be to determine frequency peaks of each of the signals 180, 182 and then compare those peaks. Another way to perform the correlation would be to overlay the signals 180, 182 on top of each other. Of course, these are only examples, and it is understood that other correlation techniques could be used.

The accelerometer data from within a given sample interval is transmitted from the wearable computing device 14 to the mobile computing device 12 using a local wireless connection. The local connection may use Bluetooth, Bluetooth Low Energy (BLE), Zigbee, one or more 802.11 standards, a 433 MHz home automation band, or any combination thereof, for example. Such a local connection can be used to support a pairing between the wearable computing device 14 and the mobile computing device 12.

In one or more embodiments, the transfer of the accelerometer data is initiated when the wearable computing device 14 and mobile computing device 12 are within a predefined proximity of each other (e.g., on the order of 1-2 meters).

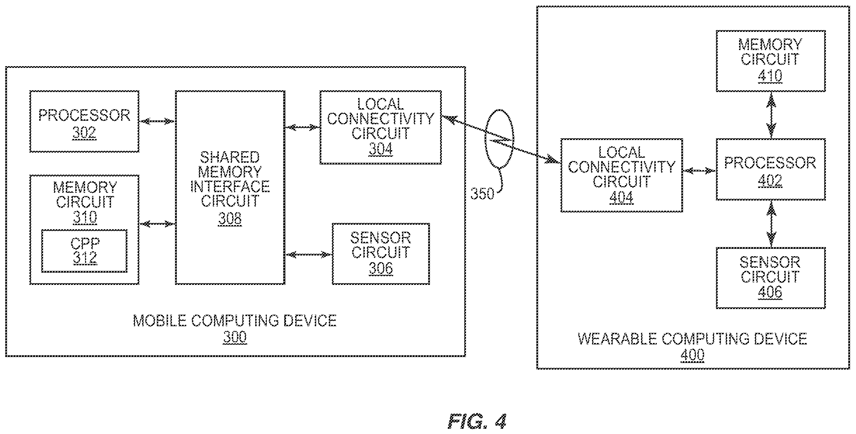

Fig. 4 illustrates an example mobile computing device 300 and associated wearable computing device 400 that may be used as the mobile computing device 12 and wearable computing device 14 of Fig. 1. The mobile computing device 300 is configured to perform the method 100 of Fig. 2 (e.g., as further depicted in the implementation of Fig. 3). The mobile computing device 300 includes one or more processing circuits (shown as processor 302), including, for example, one or more microprocessors, microcontrollers, Application Specific Integrated Circuits (ASICs), or the like configured with appropriate software and/or firmware to carry out one or more of the techniques discussed above. The one or more processing circuits of the processor 302 are configured to detect a first signal indicative of a body tremor of a limb holding the mobile computing device 300, and detect a second signal indicative of a body tremor of a limb to which the separate wearable computing device 400 is secured. The one or more processing circuits of the processor 302 are further configured to determine, based on a comparison of the body tremors, whether the limbs are the same limb, and to authenticate a user account associated with the wearable computing device 400 based on the determining indicating that the limbs are the same limb.

The mobile computing device 300 also includes a communication interface circuit (shown as "local connectivity circuit" 304) that is configured to communicate with the wearable computing device 400 to enable the detection of the second signal. In some embodiments, this includes receiving accelerometer data from the wearable computing device over local connection 350 (e.g., as shown in Fig. 3). The local connection 350 could use Bluetooth, Bluetooth Low Energy (BLE), Zigbee, one or more 802.11 standards, a 433 MHz home automation band, or any combination thereof, for example. Such a local connection can be used to support a pairing between the wearable computing device 400 and the mobile computing device 300.

The mobile computing device 300 also includes a tremor sensor circuit 306 that includes one or more accelerometers configured to provide accelerometer data (e.g., three axis accelerometer data) for a limb holding the mobile computing device 300 (e.g., for performance of blocks 102-104 in Fig. 2). In some embodiments, the tremor sensor circuit 306 may perform certain features when the main processor 302 is in a low-power mode. For example, some or all of the features described as being performed by processor 302 above (e.g., detecting the first and/or second signal, and determining if the limbs are the same limb) could be performed by the tremor sensor circuit 306 in some embodiments. The shared memory interface circuit 308 could be used to facilitate communication between the tremor sensor circuit 306 and local connectivity circuit 304 when the processor 302 is in the low-power mode.

The mobile computing device 300 includes a non-transitory computer-readable storage medium (shown as memory circuit 310) for storing instructions that configure the processor 302 as discussed above (e.g., a computer program 312 that configures the processor 302 to implement one or more of the techniques described above). Although not shown, the mobile computing device 300 could also include a power supply and electronic display, for example.

In some embodiments, the computer program product 312 includes software instructions which, when run by a processor of the mobile computing device 300 (e.g., processor 302 or possibly tremor sensor circuit 306), configures the mobile computing device 300 to: detect a first signal indicative of a body tremor of a limb holding the mobile computing device 300; detect a second signal indicative of a body tremor of a limb to which the separate wearable computing device 400 is secured. The instructions further configure the mobile computing device 300 to determine, based on a comparison of the body tremors, whether the limbs are the same limb; and authenticate a user account associated with the wearable computing device 400 based on the determining indicating that the limbs are the same limb.

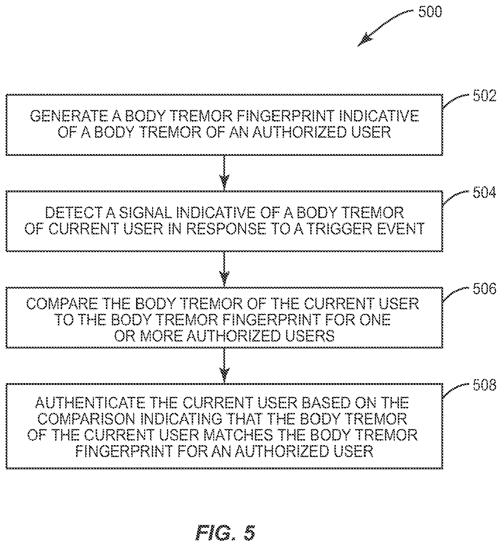

Fig. 5 illustrates another example method 500 performed by a mobile computing device 12 to authenticate a user based on body tremors. A body tremor fingerprint indicative of a body tremor of an authorized user is generated (block 502). In this context, "body tremor fingerprint" refers to a representation of a unique body tremor of a user, and not to an image of the contours of that user's fingertip. A signal indicative of a body tremor of current user is detected in response to a trigger event (block 504). The body tremor of the current user is compared to the body tremor fingerprint for one or more authorized users (block 506). The current user is authenticated based on the comparison indicating that the body tremor of the current user matches the body tremor fingerprint for an authorized user (block 508). In one or more embodiments of the method 500, the wearable computing device 14 can be entirely omitted, because the body tremor fingerprint and signal indicative of a body tremor are both obtained based on accelerometer data recorded by the mobile computing device 12.

As in the embodiments above, authenticating the user could include granting access to a limited-access feature on the mobile computing device (e.g., bypassing a lock screen) and/or automatically answering an incoming phone call to the mobile computing device.

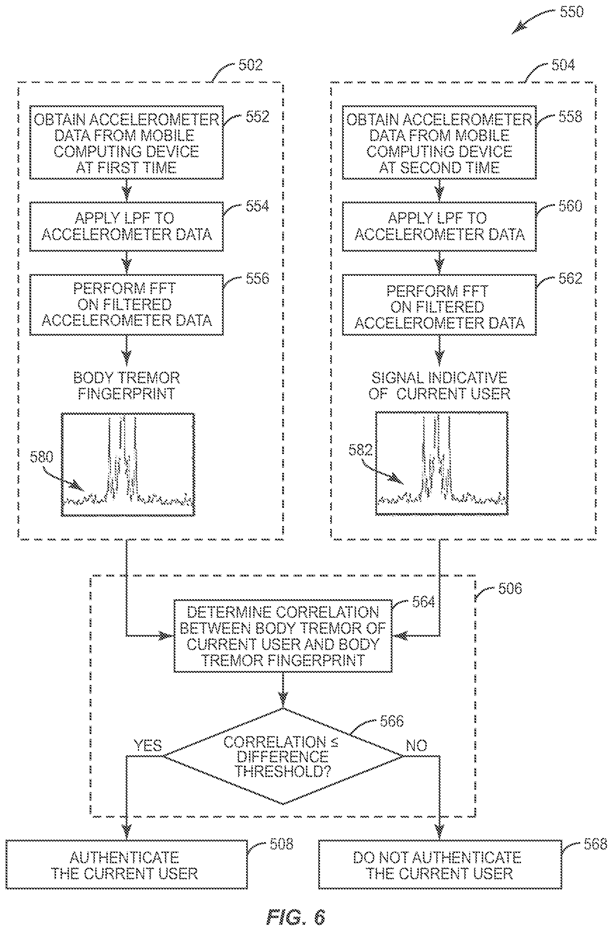

Fig. 6 illustrates an example implementation 250 of aspects of the method 500 of Fig. 5. In the example of Fig. 6, blocks 552-556 are an example implementation of block 502 from Fig. 5, blocks 558-562 are an example implementation of block 504 from Fig. 5, and blocks 564-566 are an example implementation of block 506 from Fig. 5. To implement block 502, accelerometer data is obtained from the mobile computing device 12 at a first time (block 552), a low pass filter is applied to the accelerometer data (block 554), and a fast Fourier transform (FFT) is performed on the filtered accelerometer data (block 556) to yield body tremor fingerprint 580. The low pass filter (LPF) filters out unwanted frequencies, so that only frequencies of interest are present (e.g., those on the order of 8-12 Hz which are representative of body tremors). The fast Fourier transform of block 556 converts the filtered accelerometer data from the mobile computing device 12 to the frequency domain so that the frequency of body tremors represented in the accelerometer data of block 552 can be determined.

Thus, in the embodiment of Fig. 6, generating the body tremor fingerprint indicative of an authorized user comprises recording first accelerometer data using sensors of the mobile computing device 12 at a first time when a limb 16 of the authorized user is holding the mobile computing device 12, and converting the first accelerometer data to the frequency domain to produce the body tremor fingerprint 580.

To implement block 504 of Fig. 5, accelerometer data is obtained from the mobile computing device 12 at a second time that is subsequent to the first time (block 558), a low pass filter is applied to the accelerometer data (block 560), and a fast Fourier transform is performed on the filtered accelerometer data (block 562) to yield the signal 582 indicative of the current user. The low pass filter filters out unwanted frequencies, so that only frequencies of interest are present (e.g., those on the order of 8-12 Hz which are representative of body tremors). The fast Fourier transform of block 562 converts the filtered accelerometer data from the mobile computing device 12 to the frequency domain so that the frequency of body tremors represented in the accelerometer data of block 558 can be determined.

Thus, in the embodiment of Fig. 6, detecting the signal indicative of a body tremor of a current user in response to a trigger event comprises recording second accelerometer data using sensors of the mobile computing device at a second time, subsequent to the first time, when a limb 16 of the current user is holding the mobile computing device 12; and converting the second accelerometer data to the frequency domain to determine the signal 582 indicative of the body tremor of the current user.

To implement block 506 of Fig. 5, a correlation is determined between the body tremor of the current user (represented by signal 582) and the body tremor fingerprint 580 (block 564), and a determination is made as to whether the correlation differs by less than a difference threshold (block 566). If the correlation indicates that the difference between the body tremor fingerprint and the signal indicative of the body tremor of the current user is less than a difference threshold (a "YES" to block 566), the mobile computing device 12 determines that the current user is an authorized user, and the current user is authenticated (block 508). Otherwise, if the difference is greater than the difference threshold (a "NO" to block 566), then the current user of the mobile computing device 12 is not authenticated.

In some embodiments, determining a correlation between the body tremor of the current user and the body tremor fingerprint (block 564) includes determining a first frequency profile of the body tremor fingerprint 580 within a predefined bandwidth (e.g., 8-12 Hz), determining a second frequency profile of the signal 582 indicative of a body tremor of the current user within the predefined bandwidth, and determining a correlation between the first frequency profile and the second frequency profile.

The correlation of block 564 can be performed in many different ways. One way to perform such a correlation would be to determine frequency peaks of each of the signals 580, 582 and then compare those peaks. Another way to perform the correlation would be to overlay the signals 580, 582 on top of each other. Of course, these are only examples, and it is understood that other correlation methods could be used.

In one or more embodiments, the trigger event comprises a detected movement of the mobile computing device from a resting position.

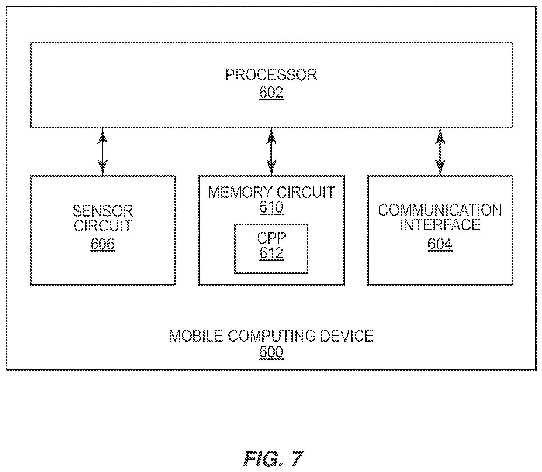

Fig. 7 illustrates an example mobile computing device 600 that is configured to perform the method 500 of Fig. 5 (e.g., as further depicted in the implementation of Fig. 6). The mobile computing device 600 includes one or more processing circuits (shown as processor 602), including, for example, one or more microprocessors, microcontrollers, Application Specific Integrated Circuits (ASICs), or the like configured with appropriate software and/or firmware to carry out one or more of the techniques discussed above. The one or more processing circuits of the processor 602 are configured to generate a body tremor fingerprint indicative of a body tremor of an authorized user, and detect a signal indicative of a body tremor of current user in response to a trigger event. The one or more processing circuits of the processor 602 are further configured to compare the body tremor of the current user to the body tremor fingerprint for one or more authorized users, and authenticate the current user based on the comparison indicating that the body tremor of the current user matches the body tremor fingerprint for an authorized user.

The mobile computing device 600 includes a tremor sensor circuit 606 that includes one or more accelerometers configured to provide accelerometer data (e.g., three axis accelerometer data) for a limb holding the mobile computing device 600 (e.g., for performance of blocks 502-504 of Fig. 5). In some embodiments, the tremor sensor circuit 506 may perform certain features when the main processor 602 is in a low-power mode. For example, some or all of the features described as being performed by processor 502 above (e.g., detecting a signal indicative of a body tremor of a current user in response to a trigger event) could be performed by the tremor sensor circuit 606 in some embodiments (e.g., when the main processor 302 is in the low-power mode).

The mobile computing device 600 includes a non-transitory computer-readable storage medium (shown as memory circuit 610) configured to store configured to store the body tremor fingerprint. The memory circuit 610 is further configured to store instructions that configure the processor 602 as discussed above (e.g., a computer program 612 that configures the processor 602 to implement the method 500 described above). Although not shown, the mobile computing device 600 could also include a power supply and electronic display, for example.

The mobile computing device 600 optionally includes a communication interface circuit 604 (shown as "local connectivity circuit" 304) that is configured to communicate wirelessly with other devices. The communication interface 604 could be configured to use Bluetooth, Bluetooth Low Energy (BLE), Zigbee, one or more 802.11 standards, a 433 MHz home automation band, or any combination thereof, for example.

In one or more embodiments, a computer program product 612 is stored in a non-transitory computer-readable medium (e.g., memory circuit 610) for authenticating a user of a mobile computing device 600. The computer program product 612 comprises software instructions which, when run by processor 602 of the mobile computing device 600, configures the mobile computing device 600 to: generate a body tremor fingerprint indicative of a body tremor of an authorized user, and detect a signal indicative of a body tremor of current user in response to a trigger event. The instructions further configure the mobile computing device 600 to compare the body tremor of the current user to the body tremor fingerprint for one or more authorized users, and authenticate the current user based on the comparison indicating that the body tremor of the current user matches the body tremor fingerprint for an authorized user.

Although an example frequency range of 8-12 Hz is discussed herein as being indicative of body tremors, it is understood that other frequency ranges could be used.

The present disclosure may, of course, be carried out in other ways than those specifically set forth herein without departing from essential characteristics of the present disclosure. The present embodiments are to be considered in all respects as illustrative and not restrictive, and all changes coming within the meaning and equivalency range of the appended claims are intended to be embraced therein.

## Claims

1. A method (100, 500) implemented by a mobile computing device (12, 300) to authenticate a user account, by:
detecting (102, 502) a first signal (180, 580) indicative of a body tremor of a limb holding the mobile computing device (12, 300);
detecting (104, 504) a second signal (182, 582) indicative of a body tremor of a limb (16) to which a separate wearable computing device (14) is secured, wherein detecting the second signal comprises obtaining the second signal from the wearable computing device;
determining (106, 506), based on an analysis of the first and second signals, whether the limbs are the same limb; and
authenticating (108, 508) the user account associated with the wearable computing device (14) based on the determining indicating that the limbs are the same limb.

2. The method of claim 1, wherein authenticating (108, 508) the user account is **characterized by** performing at least one of:
granting access to a limited-access feature on the mobile computing device (12, 300);
bypassing a lock screen of the mobile computing device (12, 300); and
automatically answering an incoming phone call to the mobile computing device (12, 300).

3. The method of any one of claims 1-2:
wherein detecting (102, 502) the first signal (180, 580) comprises converting (152n 154, 552, 554) accelerometer data from the mobile computing device (12, 300) to the frequency domain to produce (156, 556) the first signal (180, 580); and
wherein detecting (104, 504) the second signal (182, 582) comprises converting (158, 160, 558, 560) accelerometer data from the wearable computing device (14) to the frequency domain to produce (162, 562) the second signal (182, 582).

4. The method of any one of claims 1-3, wherein the determining (106, 506) is **characterized by**:
determining (164, 564) a correlation between the first signal (180, 580) and the second signal (182, 582); and
if the correlation indicates that the first and second signals differ by less than a difference threshold (166, 566), determining that the limbs (16) are the same limb.

5. The method of claim 4, wherein determining (164, 564) a correlation between the first and second signals is **characterized by**:
determining a first frequency profile of the first signal (180, 580) within a predefined bandwidth;
determining a second frequency profile of the second signal (182, 582) within the predefined bandwidth; and
determining a correlation between the first frequency profile and the second frequency profile.

6. A mobile computing device (300) comprising:
one or more processing circuits (302) configured to:
detect a first signal (180, 580) indicative of a body tremor of a limb holding the mobile computing device (14);
detect a second signal (182, 582) indicative of a body tremor of a limb (16) to which a separate wearable computing device is secured, wherein to detect the second signal the one or more processing circuits are configured to obtain the second signal from the wearable computing device;
determine, based on an analysis of the first and second signals, whether the limbs are the same limb; and
authenticate a user account associated with the wearable computing device (14) based on the determining indicating that the limbs are the same limb; and a communication interface circuit (304) configured to communicate with the wearable computing device (14) to obtain the second signal (182, 582).

7. The mobile computing device (300) of claim 6, wherein to authenticate the user account, the one or more processing circuits (302) are configured to perform at least one of:
grant access to a limited-access feature on the mobile computing device (300);
bypass a lock screen of the mobile computing device (300); and
automatically answer an incoming phone call to the mobile computing device (300).

8. The mobile computing device (300) of any one of claims 6-7:
wherein to detect the first signal (180, 580), the one or more processing circuits (302) are configured to convert accelerometer data from the mobile computing device (300) to the frequency domain to produce the first signal (180, 580); and
wherein to detect the second signal (182, 582), the one or more processing circuits (302) are configured to convert accelerometer data from the wearable computing device (14) to the frequency domain to produce the second signal (182, 582).

9. The mobile computing device (300) of any one of claims 6-8, wherein to determine whether the limbs are the same limb, the one or more processing circuits (302) are configured to:
determine a correlation between the first signal (180, 580) and the second signal (182, 582); and
If the correlation indicates that the first and second signals differ by less than a difference threshold, determine that the limbs are the same limb.

10. The mobile computing device of claim 9, wherein to determine a correlation between the first and second signals (180, 182, 580, 582), the one or more processing circuits (302) are configured to:
determine a first frequency profile of the first signal (180, 580) within a predefined bandwidth;
determine a second frequency profile of the second signal (182, 582) within the predefined bandwidth; and
determining a correlation between the first frequency profile and the second frequency profile.

11. A computer program product (612) stored in a non-transitory computer-readable medium for authenticating a user account of a mobile computing device (600), the computer program product comprising software instructions which, when run by a processor (602) of the mobile computing device, (600) configures the mobile computing device (600) to:
detect (102, 502) a first signal (180, 580) indicative of a body tremor of a limb holding the mobile computing device (600);
detect (104, 504) a second signal (182, 582) indicative of a body tremor of a limb to which a separate wearable computing device (14) is secured, wherein to detect the second signal, the software instructions run by the processor (602) configure the mobile computing device (600) to obtain the second signal from the wearable computing device;
determine (106, 506), based on an analysis of the first and second signals, whether the limbs are the same limb; and
authenticate (108, 508) the user account associated with the wearable computing device (14) based on the determining indicating that the limbs are the same limb.

12. The computer program product (612) of claim 11, wherein the software instructions configure the mobile computing device (600) to authenticate the user account by configuring the mobile computing device (600) to perform at least one of:
grant access to a limited-access feature on the mobile computing device (600);
bypass a lock screen of the mobile computing device (600); and
automatically answer an incoming phone call to the mobile computing device (600).

13. The computer program product (612) of any one of claims 11-12:
wherein to configure the mobile computing device (600) to detect the first signal (180, 580), the software instructions configure the mobile computing device (600) to convert (152, 154, 552, 554) accelerometer data from the mobile computing device (600) to the frequency domain to produce (156, 556) the first signal (180, 580); and
wherein to configure the mobile computing device (600) to detect the second signal (182, 582), the software instructions configure the mobile computing device to convert (158, 160, 558, 560) accelerometer data from the wearable computing device (14) to the frequency domain to produce (162, 562) the second signal (182, 582).

14. The computer program product (612) of any one of claims 11-13, wherein to configure the mobile computing device (600) to determine whether the limbs are the same limb, the software instructions configure the mobile computing device (600) to:
determine (164, 564) a correlation between the first signal (180, 580) and the scond signal 182, 582); and
if the correlation indicates that the first and second signals differ by less than a difference threshold (166, 566), determine that the limbs are the same limb.

15. The computer program product (612) of claim 14, wherein to configure the mobile computing device (600) to determine the correlation between the first and second signals (180, 182, 580, 582), the software instructions configure the mobile computing device (600) to:
determine a first frequency profile of the first signal (180, 580) within a predefined bandwidth;
determine a second frequency profile of the second signal (182, 582) within the predefined bandwidth; and
determining a correlation between the first frequency profile and the second frequency profile.

## Patentansprüche

1. Verfahren (100, 500) zum Authentifizieren eines Benutzerkontos, das durch eine mobile Rechenvorrichtung (12, 300) implementiert wird durch:
Erfassen (102, 502) eines ersten Signals (180, 580), das für einen Körpertremor eine mobile Rechenvorrichtung (12, 300) haltenden Körperglieds bezeichnend ist;
Erfassen (104, 504) eines zweiten Signals (182, 582), das für einen Körpertremor eines Körperglieds (16) bezeichnend ist, an dem eine separate tragbare Rechenvorrichtung (14) befestigt ist, wobei das Erfassen des zweiten Signals ein Erhalten des zweiten Signals von der tragbaren Rechenvorrichtung umfasst;
Bestimmen (106, 506), auf Grundlage einer Analyse der ersten und zweiten Signale, ob die Körperglieder das gleiche Körperglied sind; und
Authentifizieren (108, 508) des mit der tragbaren Rechenvorrichtung (14) verknüpften Benutzerkontos auf der Grundlage, dass das Bestimmen anzeigt, dass die Körperglieder das gleiche Körperglied sind.

2. Verfahren nach Anspruch 1, wobei das Authentifizieren (108, 508) des Benutzerkontos **gekennzeichnet durch** ein Ausführen mindestens eines aus:
Gewähren eines Zugangs zu einem zugriffsbeschränkten Merkmal auf der mobilen Rechenvorrichtung (12, 300);
Umgehen eines Sperrbildschirms der mobilen Rechenvorrichtung (12, 300); und
automatisches Annehmen eines auf der mobile Rechenvorrichtung (12, 300) eingehenden Telefonanrufs.

3. Verfahren nach einem der Ansprüche 1-2:
wobei das Erfassen (102, 502) des ersten Signals (180, 580) ein Umwandeln (152n 154, 552, 554) von Daten eines Beschleunigungsmessers der mobilen Rechenvorrichtung (12, 300) in den Frequenzbereich umfasst, um das erste Signal (180, 580) zu erzeugen (156, 556); und
wobei das Erfassen (104, 504) des zweiten Signals (182, 582) ein Umwandeln (158, 160, 558, 560) von Daten eines Beschleunigungsmessers der tragbaren Rechenvorrichtung (14) in den Frequenzbereich umfasst, um das zweite Signal (182, 582) zu erzeugen (162, 562).

4. Verfahren nach einem der Ansprüche 1-3, wobei das Bestimmen (106, 506) **gekennzeichnet ist durch**:
Bestimmen (164, 564) einer Korrelation zwischen dem ersten Signal (180, 580) und dem zweiten Signal (182, 582); und
falls die Korrelation anzeigt, dass sich die ersten und zweiten Signale um weniger als einen Differenzschwellenwert (166, 566) unterscheiden, Bestimmen, dass die Körperglieder (16) das gleiche Körperglied sind.

5. Verfahren nach Anspruch 4, wobei das Bestimmen (164, 564) einer Korrelation zwischen den ersten und zweiten Signalen **gekennzeichnet ist durch**:
Bestimmen eines ersten Frequenzprofils des ersten Signals (180, 580) innerhalb einer vordefinierten Bandbreite;
Bestimmen eines zweiten Frequenzprofils des zweiten Signals (182, 582) innerhalb der vordefinierten Bandbreite; und
Bestimmen einer Korrelation zwischen dem ersten Frequenzprofil und dem zweiten Frequenzprofil.

6. Mobile Rechenvorrichtung (300), umfassend:
eine oder mehrere Verarbeitungsschaltungen (302), die eingerichtet sind zum:
Erfassen eines ersten Signals (180, 580), das für einen Körpertremor eines eine mobile Rechenvorrichtung (14) haltenden Körperglieds bezeichnend ist;
Erfassen eines zweiten Signals (182, 582), das für einen Körpertremor eines Körperglieds (16) bezeichnend ist, an dem eine separate tragbare Rechenvorrichtung befestigt ist, wobei die eine oder mehreren Verarbeitungsschaltungen dazu eingerichtet sind, zum Erfassen des zweiten Signals das zweite Signal von der tragbaren Rechenvorrichtung zu erhalten;
Bestimmen, auf Grundlage einer Analyse der ersten und zweiten Signale, ob die Körperglieder das gleiche Körperglied sind; und
Authentifizieren eines mit der tragbaren Rechenvorrichtung (14) verknüpften Benutzerkontos auf der Grundlage, dass das Bestimmen anzeigt, dass die Körperglieder das gleiche Körperglied sind; und
eine Kommunikationsschnittstellenschaltung (304), die dazu eingerichtet ist, mit der tragbaren Rechenvorrichtung (14) zu kommunizieren, um das zweite Signal (182, 582) zu erhalten.

7. Mobile Rechenvorrichtung (300) nach Anspruch 6, wobei die eine oder die mehreren Verarbeitungsschaltungen (302) dazu eingerichtet sind, zum Authentifizieren des Benutzerkontos mindestens eines auszuführen aus.
Gewähren eines Zugriffs auf ein zugriffsbeschränktes Merkmal auf der mobilen Rechenvorrichtung (300);
Umgehen eines Sperrbildschirms der mobilen Rechenvorrichtung (300); und automatisches Annehmen eines auf der mobile Rechenvorrichtung (12, 300) eingehenden Telefonanrufs.

8. Mobile Rechenvorrichtung (300) nach einem der Ansprüche 6-7:
wobei die eine oder die mehreren Verarbeitungsschaltungen (302) zum Erfassen des ersten Signals (180, 580) dazu eingerichtet sind, Daten eines Beschleunigungsmessers der mobilen Rechenvorrichtung (300) in den Frequenzbereich zu konvertieren, um das erste Signal (180, 580) zu erzeugen; und
wobei die eine oder die mehreren Verarbeitungsschaltungen (302) zum Erfassen des zweiten Signals (182, 582) dazu eingerichtet sind, Daten eines Beschleunigungsmessers der tragbaren Rechenvorrichtung (14) in den Frequenzbereich umzuwandeln, um das zweite Signal (182, 582) zu erzeugen.

9. Mobile Rechenvorrichtung (300) nach einem der Ansprüche 6-8, wobei die eine oder die mehreren Verarbeitungsschaltungen (302) zum Bestimmen, ob die Körperglieder das gleiche Körperglied sind, eingerichtet sind zum:
Bestimmen einer Korrelation zwischen dem ersten Signal (180, 580) und dem zweiten Signal (182, 582); und
falls die Korrelation anzeigt, dass sich die ersten und zweiten Signale um weniger als einen Differenzschwellenwert unterscheiden, Bestimmen, dass die Körperglieder das gleiche Körperglied sind.

10. Mobile Rechenvorrichtung nach Anspruch 9, wobei die eine oder mehreren Verarbeitungsschaltungen (302) zum Bestimmen einer Korrelation zwischen den ersten und zweiten Signalen (180, 182, 580, 582) eingerichtet sind zum:
Bestimmen eines ersten Frequenzprofils des ersten Signals (180, 580) innerhalb einer vordefinierten Bandbreite;
Bestimmen eines zweiten Frequenzprofils des zweiten Signals (182, 582) innerhalb der vordefinierten Bandbreite; und
Bestimmen einer Korrelation zwischen dem ersten Frequenzprofil und dem zweiten Frequenzprofil.

11. Computerprogrammprodukt (612), das in einem nichtflüchtigen, rechnerlesbaren Medium gespeichert ist, zum Authentifizieren eines Benutzerkontos einer mobilen Rechenvorrichtung (600), wobei das Computerprogrammprodukt Softwareanweisungen umfasst, die, wenn sie von einem Prozessor (602) der mobilen Rechenvorrichtung ausgeführt werden, (600) die mobile Rechenvorrichtung (600) einrichten zum:
Erfassen (102, 502) eines ersten Signals (180, 580), das für einen Körpertremor eines die mobile Rechenvorrichtung (600) haltenden Körperglieds bezeichnend ist;
Erfassen (104, 504) eines zweiten Signals (182, 582), das für einen Körpertremor eines Körperglieds bezeichnend ist, an dem eine separate tragbare Rechenvorrichtung (14) befestigt ist, wobei die vom Prozessor (602) ausgeführten Softwareanweisungen die mobile Rechenvorrichtung (600) dazu einrichten, zum Erfassen des zweiten Signals das zweite Signal von der tragbaren Rechenvorrichtung zu erhalten;
Bestimmen (106, 506), auf Grundlage einer Analyse des ersten und zweiten Signals, ob die Körperglieder das gleiche Körperglied sind; und
Authentifizieren (108, 508) des mit der tragbaren Rechenvorrichtung (14) verknüpften Benutzerkontos auf der Grundlage, dass das Bestimmen anzeigt, dass die Körperglieder das gleiche Körperglied sind.

12. Computerprogrammprodukt (612) nach Anspruch 11, wobei die Softwareanweisungen die mobile Rechenvorrichtung (600) zum Authentifizieren des Benutzerkontos einrichten, indem sie die mobile Rechenvorrichtung (600) dazu einrichten, mindestens eines auszuführen aus:
Gewähren eines Zugriffs auf ein zugriffsbeschränktes Merkmal auf der mobilen Rechenvorrichtung (600);
Umgehen eines Sperrbildschirms der mobilen Rechenvorrichtung (600); und
automatisches Annehmen eines auf der mobilen Rechenvorrichtung (600) eingehenden Telefonanrufs.

13. Computerprogrammprodukt (612) nach einem der Ansprüche 11-12:
wobei die Softwareanweisungen die mobile Rechenvorrichtung (600) zum Einrichten der mobilen Rechenvorrichtung (600) zum Erfassen des ersten Signals (180, 580) zum Umwandeln (152, 154, 552, 554) von Daten eines Beschleunigungsmessers der mobilen Rechenvorrichtung (600) in den Frequenzbereich einrichten, um das erste Signal (180, 580) zu erzeugen (156, 556); und
wobei die Softwareanweisungen die mobile Rechenvorrichtung zum Einrichten der mobilen Rechenvorrichtung (600) zum Erfassen des zweiten Signals (182, 582) zum Umwandeln (158, 160, 558, 560) von Daten eines Beschleunigungsmessers der tragbaren Rechenvorrichtung (14) in den Frequenzbereich einrichten, um das zweite Signal (182, 582) zu erzeugen (162, 562).

14. Computerprogrammprodukt (612) nach einem der Ansprüche 11-13, wobei die Softwareanweisungen die mobile Rechenvorrichtung (600) zum Einrichten der mobilen Rechenvorrichtung (600) zum Bestimmen, ob die Körperglieder das gleiche Körperglied sind, einrichten zum:
Bestimmen (164, 564) einer Korrelation zwischen dem ersten Signal (180, 580) und dem zweiten Signal 182, 582); und
falls die Korrelation anzeigt, dass sich die ersten und zweiten Signale um weniger als einen Differenzschwellenwert (166, 566) unterscheiden, Bestimmen, dass die Körperglieder das gleiche Körperglied sind.

15. Computerprogrammprodukt (612) nach Anspruch 14, wobei die Softwareanweisungen die mobile Rechenvorrichtung (600) zum Einrichten der mobilen Rechenvorrichtung (600) zum Bestimmen der Korrelation zwischen den ersten und zweiten Signalen (180, 182, 580, 582) einrichten zum:
Bestimmen eines ersten Frequenzprofils des ersten Signals (180, 580) innerhalb einer vordefinierten Bandbreite;
Bestimmen eines zweiten Frequenzprofils des zweiten Signals (182, 582) innerhalb der vordefinierten Bandbreite; und
Bestimmen einer Korrelation zwischen dem ersten Frequenzprofil und dem zweiten Frequenzprofil.

## Revendications

1. Procédé (100, 500) mis en œuvre par un dispositif informatique mobile (12, 300) pour authentifier un compte d'utilisateur, comprenant les étapes consistant à :
détecter (102, 502) un premier signal (180, 580) indiquant un tremblement corporel d'un membre tenant le dispositif informatique mobile (12, 300) ;
détecter (104, 504) un second signal (182, 582) indiquant un tremblement corporel d'un membre (16) auquel est fixé un dispositif technovestimentaire séparé (14), où la détection du second signal comprend l'obtention du second signal à partir du dispositif technovestimentaire ;
déterminer (106, 506), sur la base d'une analyse des premier et second signaux, si les membres sont un même membre ; et
authentifier (108, 508) le compte d'utilisateur associé au dispositif technovestimentaire (14) sur la base de l'indication, par la détermination, que les membres sont un même membre.

2. Procédé selon la revendication 1, dans lequel l'authentification (108, 508) du compte d'utilisateur est **caractérisée par** au moins l'une des étapes consistant à :
donner accès à une fonction d'accès limité sur le dispositif informatique mobile (12, 300) ;
passer outre un écran de verrouillage du dispositif informatique mobile (12, 300) ; et
répondre automatiquement à un appel téléphonique entrant sur le dispositif informatique mobile (12, 300).

3. Procédé selon l'une quelconque des revendications 1 et 2 :
dans lequel la détection (102, 502) du premier signal (180, 580) comprend la conversion (152n 154, 552, 554) de données d'accéléromètre provenant du dispositif informatique mobile (12, 300) dans le domaine fréquentiel pour produire (156, 556) le premier signal (180, 580) ; et
dans lequel la détection (104, 504) du second signal (182, 582) comprend la conversion (158, 160, 558, 560) de données d'accéléromètre provenant du dispositif techno-vestimentaire (14) dans le domaine fréquentiel pour produire (162, 562) le second signal (182, 582).

4. Procédé selon l'une quelconque des revendications 1 à 3, dans lequel la détermination (106, 506) est **caractérisée par** :
la détermination (164, 564) d'une corrélation entre le premier signal (180, 580) et le second signal (182, 582) ; et
si la corrélation indique que les premier et second signaux diffèrent de moins d'un seuil de différence (166, 566), déterminer que les membres (16) sont un même membre.

5. Procédé selon la revendication 4, dans lequel la détermination (164, 564) d'une corrélation entre les premier et second signaux est **caractérisée par** :
la détermination d'un premier profil de fréquence du premier signal (180, 580) à l'intérieur d'une largeur de bande prédéfinie ;
la détermination d'un second profil de fréquence du second signal (182, 582) à l'intérieur de la largeur de bande prédéfinie ; et
la détermination d'une corrélation entre le premier profil de fréquence et le second profil de fréquence.

6. Dispositif informatique mobile (300) comprenant :
un ou plusieurs circuits de traitement (302) configurés pour :
détecter un premier signal (180, 580) indiquant un tremblement corporel d'un membre tenant le dispositif informatique mobile (14) ;
détecter un second signal (182, 582) indiquant un tremblement corporel d'un membre (16) auquel est fixé un dispositif technovestimentaire séparé, où pour détecter le second signal, les un ou plusieurs circuits de traitement sont configurés pour obtenir le second signal à partir du dispositif techno-vestimentaire ;
déterminer, sur la base d'une analyse des premier et second signaux, si les membres sont un même membre ; et
authentifier un compte d'utilisateur associé au dispositif technovestimentaire (14) sur la base de l'indication, par la détermination, que les membres sont un même membre ; et
un circuit d'interface de communication (304) configuré pour communiquer avec le dispositif technovestimentaire (14) afin d'obtenir le second signal (182, 582).

7. Dispositif informatique mobile (300) selon la revendication 6, dans lequel pour authentifier le compte d'utilisateur, les un ou plusieurs circuits de traitement (302) sont configurés pour effectuer au l'une des étapes suivantes :
donner accès à une fonction d'accès limité sur le dispositif informatique mobile (300) ;
passer outre un écran de verrouillage du dispositif informatique mobile (300) ; et
répondre automatiquement à un appel téléphonique entrant sur le dispositif informatique mobile (300).

8. Dispositif informatique mobile (300) selon l'une quelconque des revendications 6 et 7,
dans lequel, pour détecter le premier signal (180, 580), les un ou plusieurs circuits de traitement (302) sont configurés pour convertir des données d'accéléromètre provenant du dispositif informatique mobile (300) dans le domaine fréquentiel afin de produire le premier signal (180, 580) ; et
dans lequel, pour détecter le second signal (182, 582), les un ou plusieurs circuits de traitement (302) sont configurés pour convertir des données d'accéléromètre provenant du dispositif technovestimentaire (14) dans le domaine fréquentiel afin de produire le second signal (182, 582) .

9. Dispositif informatique mobile (300) selon l'une quelconque des revendications 6 à 8, dans lequel, pour déterminer si les membres sont un même membre, les un ou plusieurs circuits de traitement (302) sont configurés pour :
déterminer une corrélation entre le premier signal (180, 580) et le second signal (182, 582) ; et
si la corrélation indique que les premier et second signaux diffèrent de moins d'un seuil de différence, déterminer que les membres sont un même membre.

10. Dispositif informatique mobile selon la revendication 9, dans lequel, pour déterminer une corrélation entre les premier et second signaux (180, 182, 580, 582), les un ou plusieurs circuits de traitement (302) sont configurés pour :
déterminer un premier profil de fréquence du premier signal (180, 580) à l'intérieur d'une largeur de bande prédéfinie ;
déterminer un second profil de fréquence du second signal (182, 582) à l'intérieur de la largeur de bande prédéfinie ; et
déterminer une corrélation entre le premier profil de fréquence et le second profil de fréquence.

11. Produit-programme informatique (612) stocké sur un support de stockage non transitoire lisible par ordinateur, destiné à authentifier un compte d'utilisateur de dispositif informatique mobile (600), le produit-programme informatique comprenant des instructions logicielles qui, lorsqu'elles sont exécutées par un processeur (602) du dispositif informatique mobile (600), configurent le dispositif informatique mobile (600) pour :
détecter (102, 502) un premier signal (180, 580) indiquant un tremblement corporel d'un membre tenant le dispositif informatique mobile (600) ;
détecter (104, 504) un second signal (182, 582) indiquant un tremblement corporel d'un membre auquel est fixé un dispositif technovestimentaire séparé (14), où pour détecter le second signal, les instructions logicielles exécutées par le processeur (602) configurent le dispositif informatique mobile (600) afin d'obtenir le second signal à partir du dispositif technovestimentaire ;
déterminer (106, 506), sur la base d'une analyse des premier et second signaux, si les membres sont un même membre ; et
authentifier (108, 508) le compte d'utilisateur associé au dispositif technovestimentaire (14) sur la base de l'indication, par la détermination, que les membres sont un même membre.

12. Produit-programme informatique (612) selon la revendication 11, dans lequel les instructions logicielles configurent le dispositif informatique mobile (600) pour authentifier le compte d'utilisateur en configurant le dispositif informatique mobile (600) pour effectuer au moins l'une des étapes suivantes :
donner accès à une fonction d'accès limité sur le dispositif informatique mobile (600) ;
passer outre un écran de verrouillage du dispositif informatique mobile (600) ; et
répondre automatiquement à un appel téléphonique entrant sur le dispositif informatique mobile (600).

13. Produit-programme informatique (612) selon l'une quelconque des revendications 11 et 12,
dans lequel, pour configurer le dispositif informatique mobile (600) afin de détecter le premier signal (180, 580), les instructions logicielles configurent le dispositif informatique mobile (600) pour convertir (152, 154, 552, 554) des données d'accéléromètre provenant du dispositif informatique mobile (600) dans le domaine fréquentiel afin de produire (156, 556) le premier signal (180, 580) ; et
dans lequel, pour configurer le dispositif informatique mobile (600) afin de détecter le second signal (182, 582), les instructions logicielles configurent le dispositif informatique mobile pour convertir (158, 160, 558, 560) des données d'accéléromètre provenant du dispositif techno-vestimentaire (14) dans le domaine fréquentiel afin de produire (162, 562) le second signal (182, 582).

14. Produit-programme informatique (612) selon l'une quelconque des revendications 11 à 13, dans lequel, pour configurer le dispositif informatique mobile (600) afin de déterminer si les membres sont un même membre, les instructions logicielles configurent le dispositif informatique mobile (600) pour :
déterminer (164, 564) une corrélation entre le premier signal (180, 580) et le second signal (182, 582) ; et
si la corrélation indique que les premier et second signaux diffèrent de moins d'un seuil de différence (166, 566), déterminer que les membres sont un même membre.

15. Produit-programme informatique (612) selon la revendication 14, dans lequel, pour configurer le dispositif informatique mobile (600) afin de déterminer la corrélation entre les premier et second signaux (180, 182, 580, 582), les instructions logicielles configurent le dispositif informatique mobile (600) pour :
déterminer un premier profil de fréquence du premier signal (180, 580) à l'intérieur d'une largeur de bande prédéfinie ;
déterminer un second profil de fréquence du second signal (182, 582) à l'intérieur de la largeur de bande prédéfinie ; et
déterminer une corrélation entre le premier profil de fréquence et le second profil de fréquence.
